# EUROPÄISCHE PATENTSCHRIFT

(11) **EP 2 328 822 B1**
(45) Veröffentlichungstag und Bekanntmachung des Hinweises auf die Patenterteilung: **06.06.2012**
(21) Anmeldenummer: 09782487.4
(22) Anmeldetag: 02.09.2009
(51) Int. Cl.: B65G 15/38

(54) **FÖRDERGURT ZUM TRANSPORT VON HEIßGUT**
CONVEYOR BELT FOR TRANSPORTING HOT MATERIAL
BANDE TRANSPORTEUSE SERVANT AU TRANSPORT DE PRODUITS CHAUDS

(30) Priorität: 20.09.2008 DE 102008048175
(43) Veröffentlichungstag der Anmeldung: 08.06.2011
(73) Patentinhaber: Phoenix Conveyor Belt Systems GmbH, 07422 Bad Blankenburg (DE)
(72) Erfinder: HOPFE, Jürgen, 07407 Rudolstadt (DE); SPIER, Petra, 07422 Bad Blankenburg (DE)
(74) Vertreter: Finger, Karsten
(86) Internationale Anmeldenummer: PCT/EP2009/061311
(87) Internationale Veröffentlichungsnummer: WO 2010/031692

(56) Entgegenhaltungen:
- GB-A- 1 042 301
- GB-A- 1 338 798
- US-A1- 2007 251 595

## Beschreibung

Die Erfindung betrifft einen Fördergurt mit Textileinlagen zum Transport von Heißgut.

Es ist bekannt, zum Transport von Gütern mit hohen Temperaturen wie z. B. Zementklinkern, die im zu transportierenden Zustand eine Temperatur von 500° C aufweisen können, Fördergurte aus elastomerem Werkstoff mit Textileinlagen als Festigkeitsträger einzusetzen. Als bevorzugter elastomerer Werkstoff wird zumindest die tragseitige Deckschicht des Fördergurtes aus einer Kautschukmischung mit einem hohen Anteil eines EPM-Kautschuks verwendet. Der EPM-Kautschuk hat hinsichtlich der thermischen Beständigkeit gute Werte. Allerdings ist ein Fördergurt mit textilem Festigkeitsträger nur bis zu einem Temperaturbereich von ca. 250° C einsetzbar, da sich ansonsten die aus organischem Werkstoff bestehenden Textileinlagen zersetzen würden. Die EPM-Deckschicht schützt den textilen Festigkeitsträger, der üblicherweise aus Polyester/Polyamid besteht nicht ausreichend vor der Gefahr der thermischen oxidativen Zerstörung. Es erfolgt eine Penetration der Oberflächentemperaturen in den Fördergurtkern, was eine thermische Schädigung des dortigen Festigkeitsträgers verursacht, der eine Gurtkarkasse darstellt. Das bedeutet, dass aufgrund des sich durch die hohen Temperaturen zersetzenden Fördergurtkerns der Fördergurt nur eine sehr begrenzte Standzeit beim Transport von Heißgut aufweist.

Aus der dem Oberbegriff des Anspruchs 1 entsprechenden GB 1 042 301 ist es bekannt, einen Fördergurt mit einer Gewebeeinlage aus Glasfasern und Asbestfasern auszubilden. Glasfasern und Asbestfasern haben eine hohe Wärmebeständigkeit, so dass die Fördergurte eine längere Standzeit bei dem Transport von heißen Materialien, wie beispielsweise Produkte aus Zementfabriken oder der Eisenerzaufbereitung, aufweisen. Asbestfasern sind aber mittlerweile aus gesundheitlichen Bedenken nicht mehr einsetzbar. Glasfasern haben den Nachteil einer schlechten Gummianbindung, was wiederum zu Lasten der Standzeit des Fördergurtes geht.

Der Erfindung liegt die Aufgabe zugrunde, einen Fördergurt der eingangs beschriebenen Art derart auszugestalten, dass der Fördergurtkern auch bei höheren Temperaturen des zu fördernden Gutes eine längere Standzeit aufweist.

Die Aufgabe wird erfindungsgemäß dadurch gelöst, dass in der tragseitigen Gummideckschicht eine zusätzliche Gewebelage aus Basaltfasern angeordnet ist.

Basalt ist ein basisches vulkanisches Ergussgestein, das nach einer Zerkleinerung bei hohen Temperaturen aufgeschmolzen und versponnen wird. So werden dünne Fasern aus Basalt gewonnen, die zu Basaltfäden verarbeitet werden, die wiederum auf Spulen aufgewickelt und dann als Garn zu Geweben weiterverarbeitet werden.

Die Basaltfasern können einem hohen Temperaturbereich ausgesetzt werden, ohne sich zu zersetzen. Sie haben eine niedrige Wärmeleitfähigkeit bei guter Wärmebeständigkeit. Somit erfüllt das Gewebe aus Basaltfasern die Funktion einer thermischen Isolationsschicht in dem Fördergurt. Die darunter liegenden Festigkeitsträgerlagen aus Synthesefasern wie z. B. Polyester/Polyamid werden dadurch vor einer thermischen oxidativen Zerstörung bewahrt.

In vorteilhafter Ausgestaltung der Erfindung ist die Gewebelage aus Basaltfasern im unteren Bereich der tragseitigen Gummideckschicht angeordnet. Der schützende Gummianteil über der Gewebelage ist dadurch größer.

Durch die Erfindung wird die Haltbarkeit von thermisch extrem beanspruchten Fördergurten deutlich verlängert. Das Basaltfasergewebe hat eine geringere mechanische Stabilität, die aber durch das Zusammenwirken mit der Gurtkarkasse kompensiert wird. Anhand der schematischen Zeichnung wird nachstehend ein Ausfiihrungsbeispiel der Erfindung näher erläutert.

Der im Querschnitt dargestellte Fördergurt 1 weist einen textilen Festigkeitsträger 2 auf, der aus zwei Lagen eines EP-Gewebes (Polyester/Polyamid) besteht, das beidseitig mit Haftgummi geskimmt, d.h. mechanisch bestrichen, ist und die Gurtkarkasse bildet. Trag- und laufseitig ist der beidseitig gummierte Festigkeitsträger 2 mit Gummideckschichten 3 und 4 belegt. Die tragseitige Gummideckschicht 3 besteht aus einer EPM-haltigen Kautschukmischung. In der tragseitigen Deckschicht 3 ist im unteren Bereich eine Gewebelage 5 aus Basaltfasern eingebettet. Die laufseitige Gummideckschicht 4 ist ebenfalls aus einer EPM-haltigen Kautschukmischung aufgebaut. Alle Schichten und Lagen werden zusammen ausvulkanisiert und bilden den Fördergurt.

### Bezugszeichenliste

- 1: Fördergurt
- 2: Festigkeitsträgerlagen
- 3: Tragseitige Gummideckschicht
- 4: Laufseitige Gummideckschicht
- 5: Gewebelage Basaltfasern

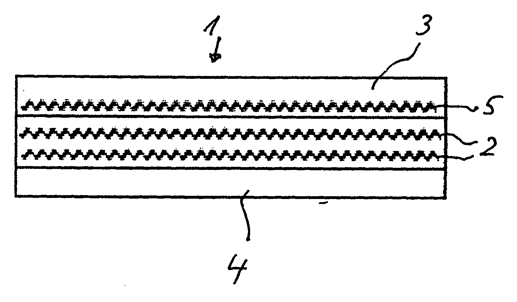

## Patentansprüche

1. Fördergurt aus elastomerem Werkstoff mit zwischen Gummideckschichten eingebetteten textilen Festigkeitsträgern zum Transport von Gütern mit hohen Temperaturen,
**dadurch gekennzeichnet,**
**dass** in der tragseitigen Gummideckschicht (3) des Fördergurtes (1) eine Gewebelage (5) aus Basaltfasern oberhalb der Festigkeitsträgerlagen (2) eingebettet ist.

2. Fördergurt nach Anspruch 1,
**dadurch gekennzeichnet,**
**dass** die Gewebelage (5) im unteren Bereich der tragseitigen Gummideckschicht (3) eingebettet ist.

## Claims

1. Conveyor belt made of elastomeric material with textile reinforcement materials embedded between rubber outer layers for transporting materials with high temperatures,
**characterized in that**
a textile sublayer (5) made of basalt fibers has been embedded above the sublayers (2) of reinforcement materials within the rubber outer layer (3) which is present on the loadbearing side of the conveyor belt (1).

2. Conveyor belt according to Claim 1,
**characterized in that**
the textile sublayer (5) has been embedded within the lower region of the rubber outer layer (3) which is present on the loadbearing side.

## Revendications

1. Courroie transporteuse en matériau élastomère comprenant des supports de résistance textiles enrobés entre les couches de recouvrement en caoutchouc pour le transport de marchandises à des températures élevées, **caractérisée en ce qu'**une couche de tissu (5) en fibres de basalte est enrobée au-dessus des couches de support de résistance (2) dans la couche de recouvrement en caoutchouc (3) côté porteur (1).

2. Courroie transporteuse selon la revendication 1, **caractérisée en ce que** la couche de tissu (5) est enrobée dans la zone inférieure de la couche de recouvrement en caoutchouc (3) côté porteur.
